# EUROPEAN PATENT APPLICATION

(11) **EP 3 709 171 A1**
(43) Date of publication of application: **16.09.2020**
(21) Application number: 19162663.9
(22) Date of filing: 13.03.2019
(51) Int. Cl.: G06F 11/34, G06F 3/16, G06F 3/01

(54) **AUDIBLE DISTRACTIONS AT LOCATIONS EXTERNAL TO A DEVICE**

(71) Applicant: Nokia Technologies Oy, 02610 Espoo (FI)
(72) Inventor: BEARD, Timothy Giles, 1015 Lausanne (CH); DUFFY, David Michael, 1015 Lausanne (CH); LAWRENSON, Matthew John, 1015 Lausanne (CH)
(74) Representative: Swindell & Pearson Limited

(57) **Abstract**

An apparatus comprising means for, a method comprising, and a computer program that performs: obtaining one or more values of user-device interaction parameters that parameterize user-device interaction; analyzing the obtained one or more values of the user-device interaction parameters to determine whether to cause rendering of an audible distraction; wherein for a first one or more values of user-device interaction parameters, the audible distraction is caused to be rendered as a sound source at a location which is external to the device and which is not currently associated with rendering of sound sources, and wherein for a second, different one or more values of user-device interaction parameters, the audible distraction is not caused to be rendered as a sound source at the location which is external to the device and which is not currently associated with rendering of sound sources.

## Description

### TECHNOLOGICAL FIELD

Embodiments of the present disclosure relate to audible distractions at locations external to a device. Some relate to audible distractions at locations external to a device to interrupt user-device interaction.

### BACKGROUND

Excessive interaction with a device by a user can have negative effects on the user and on the device. Users can be made aware of the amount of time that they are spending interacting with a device and how this time is distributed between interaction with different applications run on the device.

### BRIEF SUMMARY

According to various, but not necessarily all, embodiments there is provided an apparatus comprising means for: obtaining one or more values of user-device interaction parameters that parameterize user-device interaction; analyzing the obtained one or more values of the user-device interaction parameters to determine whether to cause rendering of an audible distraction; wherein for a first one or more values of user-device interaction parameters, the audible distraction is caused to be rendered as a sound source at a location which is external to the device and which is not currently associated with rendering of sound sources, and wherein for a second, different one or more values of user-device interaction parameters, the audible distraction is not caused to be rendered as a sound source at the location which is external to the device and which is not currently associated with rendering of sound sources.

According to various, but not necessarily all, embodiments there is provided a method comprising: obtaining one or more values of user-device interaction parameters that parameterize user-device interaction; analyzing the obtained one or more values of the user-device interaction parameters to determine whether to cause rendering of an audible distraction; wherein for a first one or more values of user-device interaction parameters, the audible distraction is caused to be rendered as a sound source at a location which is external to the device and which is not currently associated with rendering of sound sources, and wherein for a second, different one or more values of user-device interaction parameters, the audible distraction is not caused to be rendered as a sound source at the location which is external to the device and which is not currently associated with rendering of sound sources.

According to various, but not necessarily all, embodiments there is provided a computer program that, when run on a computer, performs: obtaining one or more values of user-device interaction parameters that parameterize user-device interaction; analyzing the one or more obtained values of the user-device interaction parameters to determine whether to cause rendering of an audible distraction; wherein for a first one or more values of user-device interaction parameters, the audible distraction is caused to be rendered as a sound source at a location which is external the device and which is not currently associated with rendering of sound sources, and wherein for a second, different one or more values of user-device interaction parameters, the audible distraction is not caused to be rendered as a sound source at the location which is external to the device and which is not currently associated with rendering of sound sources.

According to various, but not necessarily all, embodiments there is provided an apparatus comprising: at least one processor; and at least one memory including computer program code, the at least one memory and the computer program code configured to, with the at least one processor, cause the apparatus at least to perform: obtaining one or more values of user-device interaction parameters that parameterize user-device interaction; analyzing the obtained one or more values of the user-device interaction parameters to determine whether to cause rendering of an audible distraction; wherein for a first one or more values of user-device interaction parameters, the audible distraction is caused to be rendered as a sound source at a location which is external to the device and which is not currently associated with rendering of sound sources, and wherein for a second, different one or more values of user-device interaction parameters, the audible distraction is not caused to be rendered as a sound source at the location which is external to the device and which is not currently associated with rendering of sound sources.

According to various, but not necessarily all, embodiments there is provided a non-transitory computer readable medium comprising program instructions for causing an apparatus to perform at least the following: obtaining one or more values of user-device interaction parameters that parameterize user-device interaction; analyzing the one or more obtained values of the user-device interaction parameters to determine whether to cause rendering of an audible distraction; wherein for a first one or more values of user-device interaction parameters, the audible distraction is caused to be rendered as a sound source at a location which is external the device and which is not currently associated with rendering of sound sources, and wherein for a second, different one or more values of user-device interaction parameters, the audible distraction is not caused to be rendered as a sound source at the location which is external to the device and which is not currently associated with rendering of sound sources.

According to various, but not necessarily all, embodiments there is provided a non-transitory computer readable medium comprising program instructions stored thereon for performing at least the following: obtaining one or more values of user-device interaction parameters that parameterize user-device interaction; analyzing the one or more obtained values of the user-device interaction parameters to determine whether to cause rendering of an audible distraction; wherein for a first one or more values of user-device interaction parameters, the audible distraction is caused to be rendered as a sound source at a location which is external the device and which is not currently associated with rendering of sound sources, and wherein for a second, different one or more values of user-device interaction parameters, the audible distraction is not caused to be rendered as a sound source at the location which is external to the device and which is not currently associated with rendering of sound sources.

The following portion of this 'Brief Summary' section, describes various features that may be features of any of the embodiments described in the foregoing portion of the 'Brief Summary' section. The description of a function should additionally be considered to also disclose any means suitable for performing that function.

For different users within a same environment, the location, at which the audible distraction is caused to be rendered as a sound source, may be different.

The location, at which the audible distraction is caused to be rendered as a sound source, may be selected from amongst one or more putative locations which are external to the device and which are within an environment.

The selection of the location, at which the audible distraction is caused to be rendered as a sound source, may be based on one or more of: a record of previous audible distractions; a record of interests of the user; or the obtained values of the user-device interaction parameters.

The record of previous audible distractions may comprise a record of locations at which previous audible distractions have been rendered as sound sources which have successfully distracted the user and a record of locations at which previous audible distractions have been rendered as sound sources which have been unsuccessful at distracting the user.

The record of interests of the user may comprise interests specified by the user and/or interests learnt based on content rendered at the device during one or more previous user-device interactions.

Analysis of the environment may be caused to determine the one or more putative locations which are external to the device and which are within the environment.

The location, at which the audible distraction is caused to be rendered as a sound source, may be based on a location of an external, real-world object.

The location of the external, real-world object may be determined using computer vision.

The location, at which the audible distraction is caused to be rendered as a sound source, may be a position along a line of sight between the user and the external, real-world object.

The location, at which the audible distraction is caused to be rendered as a sound source, may be a position along the line of sight between the device and the external, real-world object.

Rendering of the audible distraction may be conditional on a likelihood of whether the user can be successfully distracted at the current time.

The audible distraction may comprise different audio content when rendered as a sound source at different locations which are external to the device.

The audio content of the audible distraction may comprise audio content having a preexisting association with the location at which the audible distraction is caused to be rendered as a sound source.

User-device interaction parameters may comprise one or more of: data indicative of actuation of the device; data indicative of an environment in which the device is located; or data indicative of biometric parameters of the user.

User-device interaction parameters may comprise one or more of:
a type of user input made to the device;
a duration of interaction with the device;
a duration of interaction with a specified application;
a duration of interaction with specified content;
a frequency of interaction with the device;
a frequency of interaction with a specified application;
a frequency of interaction with specified content;
an identity or classification of a current foreground application running on the device;
an identity or classification of current content rendered at the device;
a time of day at which the user-device interaction occurs;
a location at which the user-device interaction occurs;
a facial expression of the user;
a heart rate of the user; or
a breathing rate of the user.

Analyzing the obtained values of the user-device interaction parameters may comprise determining whether the obtained values of the user-device interaction parameters are within at least one subspace of a defined parameter space, spanned by the user-device interaction parameters, wherein the at least one subspace is associated with causing rendering of the audible distraction. The first one or more values of user-device interaction parameters describe a point in the parameter space which is within the at least one subspace. The second, different one or more values of user-device interaction parameters describe a point in the parameter space which is not within the at least one subspace.

Definition of the at least one subspace may be based on one or more goals for the user in respect of user-device interaction.

Definition of the at least one subspace may be controlled by machine learning.

According to various, but not necessarily all, embodiments there is provided a device configured to enable the rendering of media content, which is the device described in the foregoing portion of the 'Brief Summary' section, and comprises the apparatus described in the foregoing portion of the 'Brief Summary' section.

According to various, but not necessarily all, embodiments there is provided a method comprising: causing analysis of an external environment to determine a location which is external to the device; obtaining one or more values of user-device interaction parameters that parameterize user-device interaction; analyzing the one or more obtained values of the user-device interaction parameters to determine whether to cause rendering of an audible distraction; wherein for a first one or more values of user-device interaction parameters, the audible distraction is caused to be rendered as a sound source at the determined location which is external to the device, and wherein for a second, different one or more values of user-device interaction parameters, the audible distraction is not caused to be rendered as a sound source the determined location which is external to the device.

According to various, but not necessarily all, embodiments there are provided an apparatus comprising means for performing the method of the preceding paragraph and a computer program that, when run on a computer, performs the method of the preceding paragraph.

According to various, but not necessarily all, embodiments there is provided examples as claimed in the appended claims.

### BRIEF DESCRIPTION

Some example embodiments will now be described with reference to the accompanying drawings in which:
FIG. 1 schematically illustrates an example of an apparatus and user-device interaction as described herein;
FIGS 2A and 2B schematically illustrate an example of rendering audible distractions as described herein;
FIG. 3 schematically illustrates an example of determining a location at which to render an audible distraction as described herein;
FIG. 4 schematically illustrates an example of analysis of an environment as described herein;
FIG. 5 schematically illustrates an example of selecting a location at which to render an audible distraction as described herein;
FIG. 6 schematically illustrates an example of forming a record of previous audible distractions as described herein;
FIG. 7 schematically illustrates an example of a parameter space as described herein;
FIG. 8 shows an example of a method as described herein.
FIG. 9A shows an example of a controller as described herein; and
FIG. 9B shows an example of a delivery mechanism as described herein.

### DETAILED DESCRIPTION

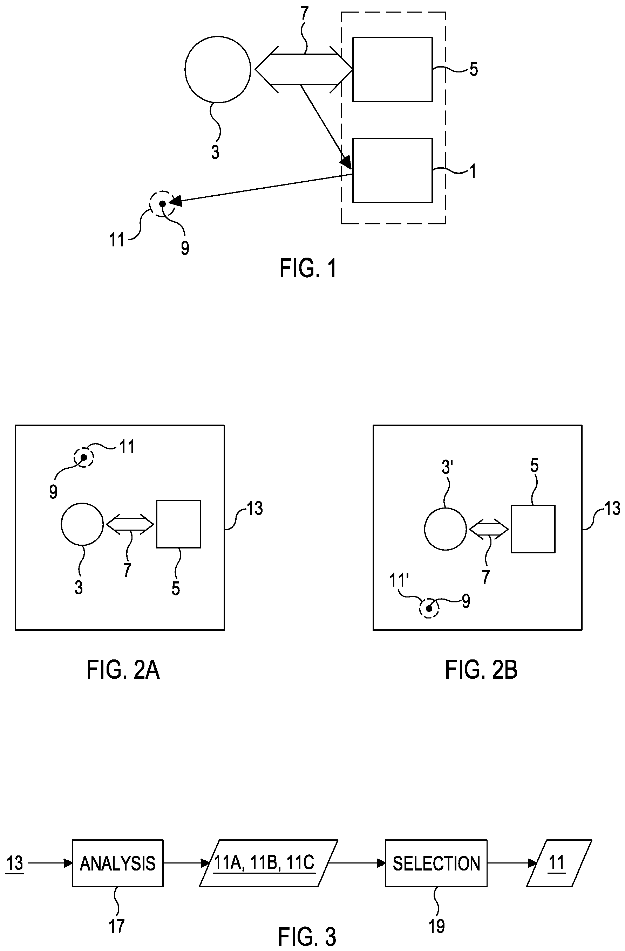

FIG. 1 schematically illustrates interaction 7 between a user 3 and a device 5 (hereinafter often referred to as user-device interaction 7). The device 5 may be, for example, an electronic personal computing device, such a smartphone or tablet, which enables the rendering of media content. The device 5 may be hand portable. The device 5 may comprise a graphical user interface for rendering media content. User-device interaction 7 comprises consumption of this rendered media content by the user 3.

There are circumstances when user-device interaction 7 is considered undesirable. User-device interaction 7 may be considered undesirable when it, for example: has a detrimental effect on the mental wellbeing of the user 3; has a direct detrimental effect on the physical wellbeing of the user 3 such as eyestrain or Repetitive Strain Injury (RSI); or has a detrimental effect on the power consumption of the device 5. These detrimental effects can be ameliorated if the user-device interaction 7 can be interrupted.

The circumstances which are considered undesirable may, in part, be manufactured by media content sources, such as applications which run on the device 5. Media content sources employ technical measures to retain the attention of the user 3 and increase the interaction 7 of the user with such media content and, consequently, the device 5 as a whole. The apparatus 1, as illustrated in FIG. 1, provides means for interrupting this interaction 7 as a counteraction to the technical measures taken by media content sources to retain the attention of the user 3. Thus, the apparatus 1 advantageously secures valuable resources such as the time and attention of the user 3 against misappropriation. The apparatus 1 is, in this manner, analogous to a lock to secure property. The apparatus 1, prevents or is at least a countermeasure against the act of stealing the time and attention of the user 3.

One way in which the user-device interaction 7 can be interrupted comprises diverting the attention of the user 3 away from the device 5 during circumstances in which the user-device interaction 7 is considered undesirable. In such an example, the amount of user-device interaction 7 is decreased.

The apparatus 1, as illustrated in FIG. 1, provides means for diverting the attention of the user 3 away from the device 5.

The apparatus 1 and device 5, though illustrated as separate entities in FIG. 1, can be embodied within one another. For example, the device 5 can comprise the apparatus 1 or the apparatus 1 can comprise the device 5. In other example, the apparatus 1 and the device 5 can be separate entities and communicate wirelessly via short range radio communications such as Wi-Fi or Bluetooth, for example, or over long range cellular radio links. In such cases the apparatus 1 may comprise a communications interface such as, for example, a radio transceiver for communication of data.

The apparatus 1 obtains one or more values of user-device interaction parameters that parameterize user-device interaction 7. For example, the apparatus 1 may obtain a value of one or more user-device interaction parameters that parameterize user-device interaction 7. By way of illustrative example: the apparatus 1 may obtains both a value of a first user-device interaction and a value of a second user-device interaction wherein the user-device interaction 7 is parameterized by the first and second user-device interaction parameters.

In some examples the apparatus 1 receives data from sensors (directly or indirectly, for example via the device 5) which parameterized the user-device interaction 7 to determine one or more values of user-device interaction parameters. Additionally or alternatively, the apparatus 1 can process received data from said sensors to obtain, by determining, one or more values of the user-device interaction parameters. In other examples the apparatus 1 comprises said sensors and thus the apparatus 1 can determine one or more values of user-device interaction parameters that parameterize user-device interaction 7.

In some examples, user-device interaction parameters comprise one or more of: data indicative of actuation of the device 5 (device-actuation data), data indicative of an environment in which the device 5 is located (environmental data), and data indicative of biometric parameters of the user 3 (biometric data).

Device-actuation data comprises, for example, one or more of:
a type of user input made to the device 5;
a duration of interaction with the device 5;
a duration of interaction with a specified application;
a duration of interaction with specified content;
a frequency of interaction with the device 5;
a frequency of interaction with a specified application;
a frequency of interaction with specified content;
an identity or classification of a current foreground application running on the device 5; or
an identity or classification of current content rendered at the device 5.

Environmental data comprises, for example, one or more of a time of day and a location. In other examples, environmental data can also include temperature, humidity, the present season (for example derived from the date), etc.

Biometric data comprises, for example, one or more of: facial expression, heart rate, and breathing rate. Any biometric data that can be indicative of a mood of the user 3 may be used. The biometric data can be derived from image data of the user 3 or from, for example, sensors on wearable devices networked with the apparatus 1.

In some examples, the apparatus 1 derives further user-device interaction parameters by performing processing in respect of one or more of the above data. For example, an estimate of a mood of the user 3 can be determined by performing sentiment analysis on the current content rendered at the device 5.

The apparatus 1 analyzes the obtained one or more values of the user-device interaction parameters to determine whether to cause rendering of an audible distraction. "Rendering" means providing in a form that is perceived by the user.

Rendering visual content to the user 3 at the device 5 may not distract the user 3 from the device 5 because the attention of the user 3 will still be directed at the device 5 if the user notices the visual content. On the other hand, visual content rendered at some location external to the device 5 may not be noticed by the user 3 when their gaze is directed at the device 5 during user-device interaction 7. A field of hearing is broader than a field of view, therefore an audible distraction can be more noticeable to the user 3 during user-device interaction 7.

For a first one or more values of user-device interaction parameters, the apparatus 1 causes the audible distraction to be rendered as a sound source 9 at location 11 which is external to the device (an "external location") and which is not currently associated with rendering of sound sources. In contrast, for a second, different one or more values of the user-device interaction parameters, the apparatus 1 does not cause the audible distraction to be rendered as a sound source 9 at the external location 11. In some examples, for the second, different one or more values of user-device interaction parameters, no audible distraction may be rendered.

In some examples the external location 11 is dependent upon the obtained one or more values of the user-device interaction parameters. In these examples, for the second, different one or more values of the user-device interaction parameters, the apparatus 1 may cause the audible distraction to be rendered as a sound source 9 at another external location or not at all.

A sound source 9 rendered at the external location 11 represents sounds rendered from the external location 11.

Channel-based audio, for example, n.m surround sound (e.g. 5.1, 7.1 or 22.2 surround sound) or binaural audio or scene-based audio, including spatial information about a sound field and sound sources, can be used to render the audible distraction as a sound source 9 at the external location 11.

Spatial audio can be used to render the audible distraction as a sound source 9 at the external location 11. "Spatial audio" is the rendering of a sound scene. "Sound scene" refers to a representation of the sound space listened to from a particular point-of-view (position) within the sound space. "Sound space" refers to an arrangement of sound sources in a three-dimensional space.

Audio content may encode spatial audio as audio objects. Examples include but are not limited to MPEG-4 and MPEG SAOC. MPEG SAOC is an example of metadata-assisted spatial audio.

Audio content may encode spatial audio as audio objects in the form of moving virtual loudspeakers.

Audio content may encode spatial audio as audio signals with parametric side information or metadata. The audio signals can be, for example, First Order Ambisonics (FOA) or its special case B-format, Higher Order Ambisonics (HOA) signals or mid-side stereo. For such audio signals, synthesis which utilizes the audio signals and the parametric metadata is used to synthesize an audio scene so that a desired spatial perception is created.

The parametric metadata may be produced by different techniques. For example, techniques used in Nokia's spatial audio capture (OZO Audio) or in Directional Audio Coding (DirAC) can be used. Both capture a sound field and represent it using parametric metadata. The parametric metadata may for example comprise: direction parameters that indicate direction per frequency band; distance parameters that indicate distance per frequency band; energy-split parameters that indicate diffuse-to-total energy ratio per frequency band. Each time-frequency tile may be treated as a sound source with the direction parameter controlling vector-based amplitude panning for a direct version and the energy-split parameter controlling differential gain for an indirect (decorrelated) version. In some embodiments, the parametric audio metadata may relate to a metadata-assisted spatial audio (MASA) format.

The audio content encoded may be speech and/or music and/or generic audio.

3GPP IVAS (3GPP, Immersive Voice and Audio services) and MPEG-I, which are currently under development, are expected to support new immersive voice and audio services, for example, mediated reality.

In some but not necessarily all examples amplitude panning techniques may be used to create or position a sound object. For example, the known method of vector-based amplitude panning (VBAP) can be used to position a sound source.

A sound object may be re-positioned by mixing a direct form of the object (an attenuated and directionally-filtered direct sound) with an indirect form of the object (e.g. positioned directional early reflections and/or diffuse reverberant). A sound source appears closer if it is louder and less reverberant and appears further away if it is quieter and more reverberant.

The rendering of the audible distraction as a sound source 9 at the external location 11 can be performed by, without limitation: headphones connected (wired or wirelessly) to the device 5 and using head-related transfer functions (HRTF) to synthesize binaural sound; by one or more networked speakers at locations external to the device 5; or a parametric speaker comprised in the device 5.

The one or more networked speakers at locations external to the device 5 may comprise directional speaker such as a directional soundbar comprising an array of speakers or a parametric speaker.

A parametric speaker is a particular type of directional speaker which comprises an array of ultrasonic transducers. The use of high-frequencies, such as ultrasonic frequencies, reduces diffraction as compared to audible frequencies. Thus, an array of ultrasonic transducers can project a narrow beam in a desired direction. The array of ultrasonic transducers produces a narrow, modulated beam comprising a carrier signal and a modulating signal, both at ultrasonic frequencies. For example, the carrier signal may have a constant frequency of 200 kHz and the modulating signal may fluctuate within a frequency band between 200,200 Hz and 220 kHz. When the narrow, modulated beam collides with an obstacle, the carrier signal and modulating signal interfere to produce a third signal in the audible frequency band, for example 200 Hz to 20 kHz. To make sounds appear to come from a particular direction, the apparatus 1 may cause the narrow, modulated beam to be directed at an obstacle lying in that particular direction to create an audible sound source at the location of that obstacle such that sounds appears to be coming from that particular direction.

In at least some examples, the external location 11 at which the apparatus 1 causes the audible distraction to be rendered as a sound source 9 is not or is not currently associated with rendering of sound sources. In some examples the external location 11 is not currently associated with the location of any currently rendered sound source. For example, the external location 11 is distinct from the location of any electroacoustic transducer presently rendering audio content to the user 3 under control of the device 5. Therefore, the audible distraction is caused to be rendered as a sound source 9 at a new location which is unexpected to the user 3. The new location may be unattended by the user 3, for example, it may be outside of the focus of attention of the user 3. The audible distraction causes an involuntary physiological response from the user 3 rather than being merely tuned out. The mechanisms underlying this involuntary physiological response are described in WETZEL, N. et al., "Infant and adult pupil dilation in response to unexpected sounds", Developmental Psychobiology, Volume 58, Issue 3, April 2016, pages 382-392. The cognitive system of the user 3 establishes a predictive model of their acoustic environment. If actual auditory input (sounds) violates this predictive model, an error signal is generated calling for attention. The rendering of the audible distraction as a sound source 9 at an external location 11 not currently associated with rendering of sound sources violates this predictive model. Attention of the user 3 is therefore involuntarily directed to the source of the violation. The attention of the user 3 is involuntarily directed to the external location 11. The source of the violation is subsequently evaluated by the user 3 and the user 3 decides whether to continue attending to the source of the violation or to reorient their attention back to their previous focus.

In some examples, the external location 11 is one which is judged to be capable of retaining the attention of the user 3 once it has been diverted from the device 5. As a result, the external location 11 at which the audible distraction is rendered as a sound source 9 is determined by the apparatus 1 based, at least in part, on the identity of the user 3.

In some examples, the external location 11 is one which is judged likely to have a positive impact on achieving goals of the user 3 in respect of user-device interaction 7 or in respect of their wider wellbeing. For example, the external location 11 may direct attention of the user 3 towards: the outdoors and the natural environment; objects around the user 3 with attachments to human relationships such as pictures of family and friends; to objects around the user 3 with a connection to physical activities, such as sports equipment; household activities likely to have a positive impact on the wellbeing of the user 3, such as cooking a healthy meal; etc.

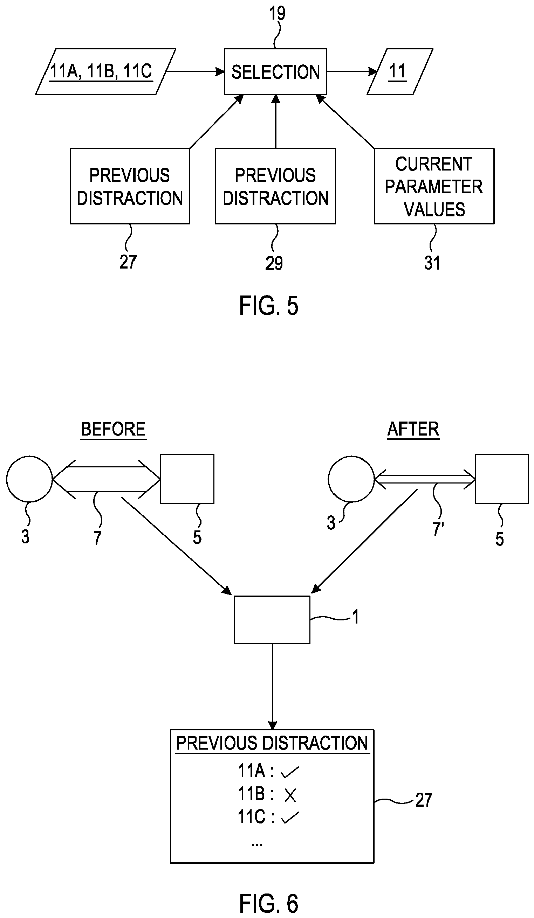

FIGS. 2A and 2B schematically illustrate how for different users 3, 3' within a same external environment 13, the respective external locations 11, 11' at which an audible distraction is rendered are different. A first user 3 will perceive an audible distraction to have its source at a first external location 11 whereas a second user 3'will perceive an audible distraction to have its source at a second, different external location 11'. The selection of the external location 11, 11' at which the audible distraction is caused to be rendered as a sound source 9 is described in more detail in relation to FIG. 5 below.

In some examples the audio content of the audible distraction comprises novel or deviant sounds. The audio content may in some respect discriminably differ from any ongoing auditory simulation, either generated by the device 5 or ambient sounds occurring in the external environment 13. The audio content may violate some previously invariant characteristic of an auditory stimulus sequence. For example, if any ongoing auditory simulation is rhythmic, the audio content of the audible distraction can be configured disrupt this rhythm. Alternatively, the timing of the rendering can be controlled to be out of sync with this rhythm. The audio content may be task-irrelevant with respect to the task to which the user 3 is attending by interaction 7 with the device 5.

In some examples the audio content of the audible distraction is location-dependent. The audible distraction comprises different audio content when rendered as a sound source 9 at different external locations 11, 11'. The audio content of the audible distraction can comprise audio content which has a preexisting association with the respective external locations 11, 11' and which may be read from a look-up table or database. For example, where an external location 11, 11' corresponds with a kitchen or kitchen area, the audible distraction may comprise audio content which replicates sound that may currently occur in a kitchen such as, for example, the sound of a kettle boiling.

In some examples, the audible distraction is rendered such that it is audible to the user 3.

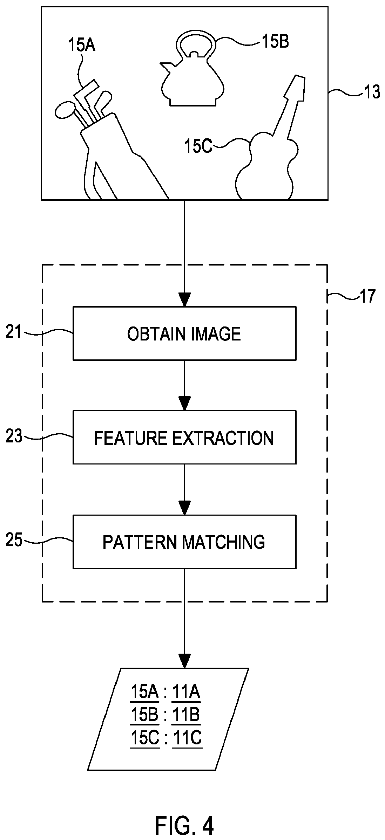

Where the external location 11, 11' may be based on a location of one of the external, real-world objects 15A-C as depicted in FIG. 4, the audible distraction comprises audio content having a preexisting association with such objects 15A-C. For example: the sound of a golf club striking a golf ball can be associated with a set of golf clubs 15A; the sound of a kettle boiling can be associated with a kettle 15B; and the sound of a guitar strings being strummed can be associated with a guitar 15C. Where the external, real-world objects 15A-C comprise, for example, pictures of people, the audio content may comprise a voice recording of the depicted person.

Therefore, the audio content of the audible distraction, at least momentarily, misleads the user 3 into believing that the audible distraction results from the occurrence of an event which is unrelated to the device 5. This increases the unexpectedness of the distraction and therefore is more likely to distract the user 3.

FIG. 3 schematically illustrates how the external location 11 is determined.

Upon at least a first occasion that the device 5 is located within a particular environment 13, the apparatus 1 causes an analysis 17 of the environment 13 to be performed in order to determine or identify one or more putative external locations 11A-C within the environment 13. In some examples, the one or more putative external locations 11A-C correspond to features of the environment 13 which may be capable of holding the attention of either an arbitrary user or the particular user 3. For example, the one or more putative external locations 11A-C can be based on the location of external, real-world objects 15A-C in the environment 13, as described further in relation to FIG. 4 below.

In some examples the one or more putative external locations 11A-C output from the analysis 17 of the environment 13 are stored, in association with the particular environment 13, in a database. Therefore, the one or more putative external locations 11A-C can be obtained by the apparatus 1, from the database when the device 5 is subsequently located within the same environment 13 (including subsequent occasions in which the device 5 has not, in the meantime, been removed from this environment 13) rather than requiring the analysis 17 of the environment 13 to be repeated. In some examples the analysis 17 of the environment 13 can be periodically repeated so as to account for changes that occur within the environment 13 over time. The period of repetition can be dependent on environmental factors such as the location and time of day. Additionally or alternatively, the analysis 17 of the environment 13 is repeated when the device 5 changes location to a different environment or to a novel environment.

Having obtained one or more putative external locations 11A-C, either by analysis 17 of the environment 13 or from a database, the apparatus 1 causes a selection 19 of one external location 11 at which to cause the rendering of the audible distraction as a sound source 9. The selection 19 is made between the obtained one or more putative external locations 11A-C.

In some examples the selection 19 of the external location 11 at which the apparatus 1 causes rendering of the audible distraction as a sound source 9 is determinative, according to a set of rules (or a specified algorithm) which defines an output (for example which, if any, of the obtained one or more putative external locations 11A-C is selected) based on a set of inputs.

In other examples the selection 19 is controlled by machine learning (or an unspecified algorithm). The selection 19 can be performed by a pretrained machine learning algorithm, for example one trained on data from the particular user 3, similar users or users of a same type of the particular user 3, or any one or more arbitrary users. Additionally or alternatively, the machine learning algorithm can be dynamically updated, learning over time based on feedback such as successful or unsuccessful attempts at distracting the user 3 from the device 5. The inputs on which the selection 19 is based are described in relation to FIG. 5 below.

Either the analysis 17 or the selection 19 may impose the condition that the external location 11 is not or is not currently associated with rendering of sound sources. For example, output of locations in the environment 13 which are associated with the rendering of sound sources from the analysis 17 can be prevented. This could, for example, be implemented by computer vision pattern matching using a library image or images which excludes speakers or other objects associated with rendering of sound sources. Alternatively, any of the obtained one or more external locations 11A-C which are associated with the rendering of sound sources can be discarded as a step in the selection 19.

The analysis of the obtained one or more values of the user-device interaction parameters in order to determine whether to cause rendering of an audible distraction can be performed before the analysis 17 of the environment 13 in a first example, before the selection 19 of the external location 11 at which the apparatus 1 causes rendering of the audible distraction as a sound source 9 in a second example, or after the selection 19 in a third example.

In the first example, the determination by the apparatus 1 to cause rendering of the audible distraction acts as a trigger for the apparatus 1 to cause analysis 17 of the environment 13 to determine one or more putative external locations 11A-C for rendering the audible distraction as a sound source 9. If the apparatus 1 decides against causing rendering, no analysis 17 of the environment 13 is performed.

In the second example, the determination by the apparatus 1 to cause rendering of the audible distraction acts as a trigger for the apparatus 1 to cause selection 19 of the external location 11 at which the apparatus 1 causes rendering of the audible distraction as a sound source 9 from amongst the obtained one or more putative external locations 11A-C. The one or more putative external locations 11A-C may have been obtained by preceding analysis 17 of the environment 13 or from a database.

In the third example, the determination by the apparatus 1 with regards to whether or not to cause rendering of the audible distraction is taken after the external location 11 at which the audible distraction, if any, will be rendered as a sound source 9, has been selected. Therefore, the apparatus 1 can take the selected external location 11 into account when coming to a decision with regards to whether or not to cause rendering of the audible distraction. The apparatus 1 can base the decision on both the obtained one or more values of the user-device interaction parameters and the selected external location 11. Therefore, in this example, the apparatus 1 analyzes the obtained one or more values of the user-device interaction parameters to determine whether to cause rendering of an audible distraction as a sound source 9 at the selected external location 11.

FIG. 4 shows an example of the analysis 17 of the environment 13 which is used to determine the one or more putative external locations 11A-C which are respectively based on locations of external, real-world objects 15A-C (for example, a set of golf clubs 15A, a kettle 15B, and a guitar 15C) that are present in the environment 13. In this example, computer vision is used to determine the one or more putative external locations 11A-C which are respectively based on locations of the external, real-world objects 15A-C.

A first block 21 in the analysis 17 comprises obtaining a digital image of the environment 13. The digital image is composed from image data output from one or more image sensors either comprised in the apparatus 1, the device 5, or other networked devices. The image sensors may comprise light-sensitive cameras, range sensors, tomography devices, radar, ultra-sonic cameras, etc. In some examples image filtering operations are applied to the image data to achieve, for example, noise removal or image enhancement.

A second block 23 of the analysis 17 comprises feature extraction wherein features are detected in the digital image and output along with their location. Such features include, for example, edges, corners, and interest points such as, for example, those defined by regions of minima in an image auto-correlation function as described in s.4.8 of *Hartley and Zisserman* (HARTLEY, Richard, and ZISSERMAN, Andrew, "Multiple View Geometry in Computer Vision", Cambridge University Press, second edition, 2003) and/or those defined using scale invariant feature transform (SIFT) features as described in LOWE, David G., "Distinctive Image Features from Scale-Invariant Keypoints", International Journal of Computer Vision, Volume 60, Issue 2, November 2004, pages 91-110.

A third block 25 of the analysis comprises pattern matching wherein features extracted from the digital image are grouped to infer the presence of external real-world objects 15A-C. Various standard approaches for achieving this exist. Examples include graph matching as described in s.14.2 of *Davies* (DAVIES, E. R., "Computer and Machine Vision: Theory, Algorithms, Practicalities", Academic Press, fourth edition 2012) and suitable adaptations of the generalized Hough transform (GHT) as described in s.14.4 of *Davies.* The pattern matching compares groups of extracted features to one or more object models (for example, a library image or images) in order to recognize and locate the external, real-world objects 15A-C depicted in the digital image. Labels identifying the one or more recognized external, real-world objects 15A-C and the external locations 11A-C (for example centroid coordinates) of these objects 15A-C are output.

In other examples, the external, real-world objects 15A-C can be tagged, using, for example, RFID tags. The identity and location of these objects 15A-C in the environment 13 can be determined by means for reading these tags comprised in the apparatus 1, device 5 or other networked devices.

In still other examples, the user 3 can be enabled to manually define one or more putative external locations 11A-C corresponding to locations of interest (to the user 3) in the environment 13. For example, the apparatus 1 or device 5 can comprise a graphical user interface which enables the user 3 to select these locations of interest in a digital image of the environment 13. This can be semi-automated by using an algorithm (such as the afore-described computer vision) to propose locations of interest to the user 3 which the user 3 can accept or reject. In another example, the user 3 may move the apparatus 1 or device 5 to one or more locations of interest in the environment 13 and provide a user input to select said location(s) as one of the putative external locations 11A-C for rendering the audible distraction as a sound source 9.

While the external location 11 at which the apparatus 1 causes the audible distraction to be rendered as a sound source 9 can be based on the location of one of the external, real-world objects 15A-C in the environment 13, the external location 11 may not exactly correspond with the location of that object. In some examples, the external location 11 is instead a position along a line of sight between the user 3 and that object or between the device 5 and that object, assuming the device 5 and the user 3 to be sufficiently proximate so as for the respective lines of sight to the object to be interchangeable. This can be achieved with knowledge of the location of the device 5 which can be obtained from the device 5 or with knowledge of the location of the user 3 which can be obtained from the device 5 by means of, for example, using an image sensor comprised in the device 5 to determine the position of the user 3 relative to the device 5 or from other networked devices comprising sensors having a field of regard in which the user 3 is located.

FIG. 5 shows an example of the selection 19 of the external location 11 and, in particular, shows examples of the inputs upon which the selection 19 is based. The selection 19, in this example, is based on one or more of: a record 27 of previous audible distractions; a record 29 of interests of the user 3; and the obtained one or more values 31 of the user-device interaction parameters that parameterize the current user-device interaction 7.

The record 27 of previous audible distractions comprises a record of external locations (which may include the obtained one or more putative external locations 11A-C) at which previous audible distractions have been rendered which have successfully distracted the user 3 and a record of external locations (which may include the obtained one or more putative external locations 11A-C) at which previous audible distractions have been rendered which have been unsuccessful at distracting the user 3. In some examples, the record 27 also stores the one or more values of user-device interaction parameters determined when the previous audible distractions were rendered. The amount of weight placed on each record by the algorithm implementing the selection 19 may correspond, at least in part, with the similarity of the stored one or more values of the user-device interaction parameters to the obtained one or more values 31 of the user-device interaction parameters that parameterize the current user-device interaction 7.

The record 29 of interests of the user 3 comprises interests specified by the user 3 and/or interests learnt based on previous user-device interaction such as content rendered at the device 5 during previous user-device interactions. Interests may include, for example, activities and/or people. Such people may be identified by the user 3 as, for example, family or friends, or may be contacts with whom the user 3 has corresponded during previous user-device interaction. Any of the obtained one or more putative external locations 11A-C which have an association with interests of the user 3 comprised in the record 29 are more likely to be capable of holding the attention of the user 3 once it is diverted away from the device 5 by the rendered audible distraction. Therefore, the algorithm implementing the selection 19 can weight those putative external locations in a manner that makes their selection as the external location 11 at which the audible distraction is caused to be rendered as a sound source 9 more likely.

In some examples, the user-device interaction parameters comprise the identity or a classification of the content that is rendered at a device 5 during the current user-device interaction 7. In this example, the selection 19 is based on the identity or a classification of the content that is rendered at the device 5 during the current user-device interaction 7. Since this is the content that the user 3 is currently viewing, it may be indicative of the current interests of the user 3. Therefore, in this example, the algorithm implementing the selection 19 weights any of the obtained one or more putative external locations 11A-C that are associated with this content in a manner that makes their selection as the external location 11 at which the audible distraction is caused to be rendered as a sound source 9 more likely.

Since, in at least some examples, the purpose of the selection 19 is to determine and to select the external location 11 which is most likely to be successful at distracting the user 3 from the device 5, it stands that in these examples if there is no location likely to distract the user 3 at the current time, no external location 11 will be output from the selection 19. Thus, no rendering of an audible distraction will occur regardless of whether, upon analyzing the obtained one or more values of the user-device interaction parameters, the apparatus 1 determines that an audible distraction should be rendered. Therefore, the rendering of the audible distraction is conditional on a likelihood of whether the user 3 can be successfully distracted at the current time. This likelihood can be based on, for example, one or more of the following, each of which can be determined from the record 27 of previous audible distractions: the number or frequency of audible distractions rendered recently or within some predetermined period of time immediately preceding the current time; the locations at which audible distractions have been rendered recently or within some predetermined period of time immediately preceding the current time; the content currently rendered at the device 5; etc.

For example, if a large number of audible distractions or a number of audible distractions in excess of some predetermined threshold have been rendered recently or within some predetermined period of time immediately preceding the current time and the user 3 is still interacting 7 with the device 5, it is unlikely that another audible distraction will be successful at distracting the user 3 at this current time. Similarly, if recent audible distractions or audible distractions rendered within some predetermined period of time immediately preceding the current time have been rendered at the same or similar locations to the obtained one or more putative external locations 11A-C among which the selection 19 is to be made and the user is still interacting 7 with the device 5, it is unlikely that another audible distraction at any of the obtained one or more putative external locations 11A-C will be successful at distracting the user 3 at the current time. Similarly, if the content currently rendered at the device 5 is the same or similar to content that was previously rendered at the device 5 when multiple unsuccessful previous audible distractions were rendered, it is unlikely that another audible distraction will be successful in distracting the user 3 at this current time, while the current content is rendered at the device 5.

FIG. 6 schematically illustrates an example of the apparatus 1 forming the record 27 of previous audible distractions, as described in relation to FIG. 5 above. Forming the record 27 involves classifying audible distractions into successful distractions (represented by a tick in FIG. 6) and unsuccessful distractions (represented by a cross in FIG. 6).

In the example of FIG. 6 the classification of a particular audible distraction as a successful distraction or an unsuccessful distraction is based on user-device interaction 7 before rendering of the audible distraction and user-device interaction 7' after rendering of the audible distraction. The apparatus 1 monitors changes in the one or more values of user-device interaction parameters during a period immediately following the rendering of the audible distraction. The apparatus 1 classifies the audible distraction based on the extent of the changes with respect to the one or more values of the user-device interaction parameters immediately before rendering the audible distraction.

In some examples an audible distraction is classified as a successful distraction if the user-device interaction 7' after the rendering of the audible distraction decreases as compared to an expected usage of the device 5 (for example, based on historic usage of the device 5 by the user 3) during said period immediately following the rendering of the audible distraction. In some examples an audible distraction is classified as a successful distraction if there is no user-device interaction 7' after the rendering of the audible distraction during said period or for some threshold duration. The foregoing may be applicable to user-device interaction 7' in general or to user-device interaction 7' relating to a specific application or content.

While in the foregoing the selection 19 has been described as being performed subsequent to the analysis 17, it is to be appreciated that, in some examples, the selection 19 could be performed in respect of a predefined library of objects and the returned selected object could be input into the analysis 17 in order that the analysis 17 returns the external location 11 of the selected object in the environment 13 in order that the apparatus 1 may cause rendering of the audible distraction as a sound source 9 at, or based on, the external location 11 of this selected object.

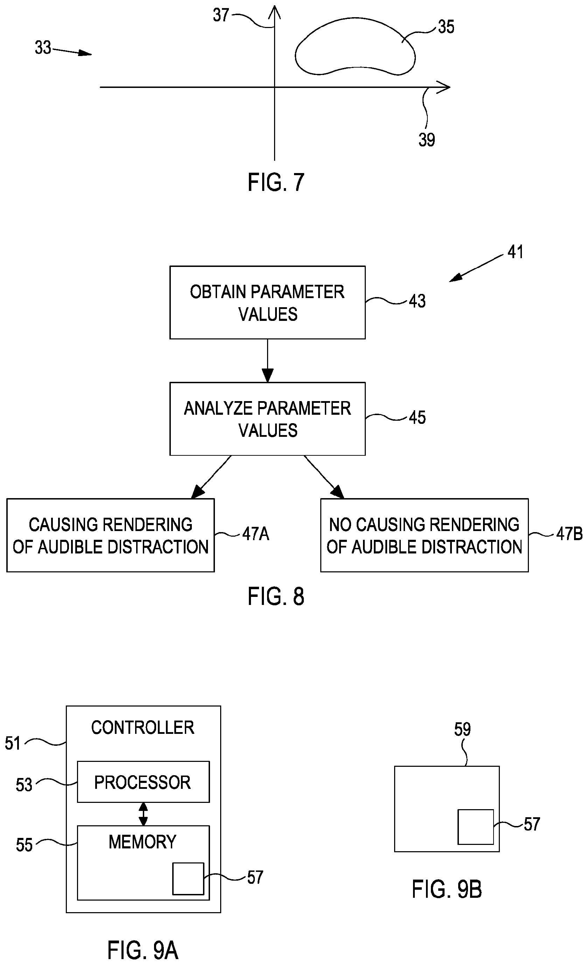

FIG. 7 schematically illustrates an example of a parameter space 33 which is defined by the user-device interaction parameters which parameterize user-device interaction 7. Each dimension 37, 39 of the parameter space 33 is represented by one of the user-device interaction parameters. For example, one dimension 37 can be represented by a duration of interaction 7 with the device 5 and another dimension 39 can be represented by the time of day at which the user-device interaction 7 occurs. Although the parameter space 33 is only illustrated in two dimensions 37, 39 in FIG. 7 it is to be appreciated that the parameter space 33 may be one-dimensional or multidimensional with the number of dimensions corresponding to the number of user-device interaction parameters into which the user-device interaction 7 is parameterized. Thus, the parameter space 33 is spanned by the user-device interaction parameters.

At least one subspace 35 within the parameter space 33 is associated with causing rendering of the audible distraction. In some examples analyzing the obtained one or more values of the user-device interaction parameters comprises determining whether the obtained one or more values of the user-device interaction parameters are within this at least one subspace 35.

If the obtained one or more values of user-device interaction parameters describe a point in the parameter space 33 which is within the subspace 35, the apparatus 1 determines to cause rendering of the audible distraction. For example, the aforementioned first one or more values of user-device interaction parameters describe a point in the parameter space 33 which is within at least one subspace 35 associated with causing rendering of the audible distraction.

Conversely, if the obtained one or more values of user-device interaction parameters describe a point in the parameter space 33 which is not within any subspace 35 associated with causing rendering of the audible distraction, the apparatus 1 determines not to cause rendering of the audible distraction. The aforementioned second, different one or more values of the user-device interaction parameters may, in some examples, describe a point that is outside of any subspace 35 associated with causing rendering of the audible distraction.

In some examples the definition of the subspaces 35 associated with causing rendering of the audible distraction is determinative, according to a set of rules (or a specified algorithm) which define thresholds in respect of particular user-device interaction parameters. For example, a threshold duration can be defined in respect of a duration of interaction 7 with the device 5. These thresholds can be functions of other user-device interaction parameters. For example, the threshold duration can vary with respect to the time of day. In some examples the rules and/or thresholds can be defined based upon one or more goals for the user 3 (such as, for example, user-specified or default goals) for healthy interaction 7 with the device 5. Goals can include, without limitation: time limits on specific applications such as social media services; limits on specific activities such as absent-minded scrolling through news feeds; undesirable moods when using specific applications such as anger when posting on social media services; etc.

In other examples, the definition of the subspaces 35 associated with causing rendering of the audible distraction is controlled by machine learning (or an unspecified algorithm). The machine learning may be supervised, such as classification in the parameter space 33 or unsupervised, such as clustering in the parameter space 33, for example k-means clustering in the parameter space 33. The machine learning can be implemented by a pretrained algorithm or by a dynamically updated algorithm which may be, for example, responsive to the impact of the rendered audible distraction on the achievement of the aforementioned goals.

Generally speaking, therefore, definition of the at least one subspace 35 can be based on one or more goals for the user 3 (such as, for example, a user-specified or default goal) in respect of user-device interaction 7.

FIG. 8 schematically illustrates an example of a method 41.

The method 41 comprises, at block 43, obtaining one or more values of user-device interaction parameters that parameterize user-device interaction 7.

In some examples block 43 can be preceded in the method 41 by causing analysis 17 of the environment 13 to determine an external location 11 or one or more putative external locations 11A-C as described in relation to FIG. 4 above.

Block 45 of the method 41 comprises analyzing the obtained one or more values of the user-device interaction parameters to determine whether to cause rendering of an audible distraction.

In some examples, if the external location 11 at which the audible distraction is to be rendered has already been determined prior to block 45, the determination of whether to cause rendering of the audible distraction in block 45 can comprise a determining whether to cause rendering of the audible distraction as a sound object 9 at the determined external location 11.

In some examples where the external location 11 at which to cause rendering of the audible distraction as a sound object 9 has not already been determined, block 45 of the method 41 is followed by either the selection 19 or both the analysis 17 and the selection 19 described in the foregoing in order to determine said external location 11.

For a first one or more values of user-device interaction parameters, the method 41 proceeds to block 47A and for a second, different one or more values of user-device interaction parameters the method 41 proceeds to block 47B.

Block 47A of the method 41 comprises causing rendering of the audible distraction as a sound source 9 at the external location 11 which is not currently associated with rendering of sound sources.

Block 47B of the method 41 comprises not causing rendering of the audible distraction as a sound source 9 at the external location 11 which is not currently associated with rendering of sound sources.

FIG. 9A illustrates an example of a controller 51. The controller 51 may function as the apparatus 1 or may be comprised within the apparatus 1.

Implementation of the controller 51 may be as controller circuitry. The controller 51 may be implemented in hardware alone, have certain aspects in software including firmware alone or can be a combination of hardware and software (including firmware).

As illustrated in FIG. 9A the controller 51 may be implemented using instructions that enable hardware functionality, for example, by using executable instructions of a computer program 57 in a general-purpose or special-purpose processor 53 that may be stored on a computer readable storage medium (disk, memory, etc.) to be executed by such a processor 53.

The processor 53 is configured to read from and write to the memory 55. The processor 53 may also comprise an output interface via which data and/or commands are output by the processor 53 and an input interface via which data and/or commands are input to the processor 53.

The memory 55 stores a computer program 57 comprising computer program instructions (computer program code) that controls the operation of the apparatus 1 when loaded into the processor 53. The computer program instructions, of the computer program 57, provide the logic and routines that enables the apparatus to perform the methods illustrated in FIG. 8. The processor 53 by reading the memory 55 is able to load and execute the computer program 57.

The apparatus 1 therefore comprises:
at least one processor 53; and
at least one memory 55 including computer program code,
the at least one memory 55 and the computer program code configured to, with the at least one processor 53, cause the apparatus 1 at least to perform:
   obtaining one or more values of user-device interaction parameters that parameterize user-device interaction 7;
   analyzing the obtained one or more values of the user-device interaction parameters to determine whether to cause rendering of an audible distraction;
   wherein for a first one or more values of user-device interaction parameters, the audible distraction is caused to be rendered as a sound source 9 at a location 11 which is external to the device 5 and which is not currently associated with rendering of sound sources, and
   wherein for a second, different one or more values of user-device interaction parameters, the audible distraction is not caused to be rendered as a sound source 9 at the location 11 which is external to the device 5 and which is not currently associated with rendering of sound sources.

As illustrated in FIG. 9B, the computer program 57 may arrive at the apparatus 1 via any suitable delivery mechanism 59. The delivery mechanism 59 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 57. The delivery mechanism may be a signal configured to reliably transfer the computer program 57. The apparatus 1 may propagate or transmit the computer program 57 as a computer data signal.

Computer program instructions for causing an apparatus to perform at least the following or for performing at least the following:
obtaining one or more values of user-device interaction parameters that parameterize user-device interaction 7;
analyzing the obtained one or more values of the user-device interaction parameters to determine whether to cause rendering of an audible distraction;
wherein for a first one or more values of user-device interaction parameters, the audible distraction is caused to be rendered as a sound source 9 at a location 11 which is external to the device 5 and which is not currently associated with rendering of sound sources, and
wherein for a second, different one or more values of user-device interaction parameters, the audible distraction is not caused to be rendered as a sound source 9 at the location 11 which is external to the device 5 and which is not currently associated with rendering of sound sources.

The computer program instructions may be comprised in a computer program, a non-transitory computer readable medium, a computer program product, a machine readable medium. In some but not necessarily all examples, the computer program instructions may be distributed over more than one computer program.

Although the memory 55 is illustrated as a single component/circuitry it may be implemented as one or more separate components/circuitry some or all of which may be integrated/removable and/or may provide permanent/semi-permanent/ dynamic/cached storage.

Although the processor 53 is illustrated as a single component/circuitry it may be implemented as one or more separate components/circuitry some or all of which may be integrated/removable. The processor 53 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the FIG. 8 may represent steps in a method and/or sections of code in the computer program 57. The illustration of a particular order to the blocks does not necessarily imply that there is a required or preferred order for the blocks and the order and arrangement of the block may be varied. Furthermore, it may be possible for some blocks to be omitted.

The apparatus 1 of FIG. 1 may be or may comprise the controller 51 of FIG. 9A or may be any computer or machine capable of reading the computer program 57 from the delivery mechanism 59 of FIG. 9B and running that computer program 57.

Where a structural feature has been described, it may be replaced by means for performing one or more of the functions of the structural feature whether that function or those functions are explicitly or implicitly described.

The apparatus 1, method 41, and computer program 57 may use machine learning (which can include statistical learning) as described in the foregoing. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
obtaining one or more values of user-device interaction parameters that parameterize user-device interaction;
analyzing the obtained one or more values of the user-device interaction parameters to determine whether to cause rendering of an audible distraction;
wherein for a first one or more values of user-device interaction parameters, the audible distraction is caused to be rendered as a sound source at a location which is external to the device and which is not currently associated with rendering of sound sources, and
wherein for a second, different one or more values of user-device interaction parameters, the audible distraction is not caused to be rendered as a sound source at the location which is external to the device and which is not currently associated with rendering of sound sources.

2. The apparatus of claim 1 wherein for different users within a same environment, the location, at which the audible distraction is caused to be rendered as a sound source, is different.

3. The apparatus of claim 1 or claim 2 wherein the means are configured to select the location, at which the audible distraction is caused to be rendered as a sound source, from amongst one or more putative locations which are external to the device and which are within an environment.

4. The apparatus of claim 3 wherein the selection of the location, at which the audible distraction is caused to be rendered as a sound source, is based on one or more of: a record of previous audible distractions; a record of interests of the user; or the obtained values of the user-device interaction parameters.

5. The apparatus of claim 4 wherein the record of previous audible distractions comprises a record of locations at which previous audible distractions have been rendered as sound sources which have successfully distracted the user and a record of locations at which previous audible distractions have been rendered as sound sources which have been unsuccessful at distracting the user.

6. The apparatus of claim 4 or claim 5 wherein the record of interests of the user comprises interests specified by the user and/or interests learnt based on content rendered at the device during one or more previous user-device interactions.

7. The apparatus of any of claims 3 to 6 wherein the means are configured to cause analysis of the environment to determine the one or more putative locations which are external to the device and which are within the environment.

8. The apparatus of any preceding claim wherein the location, at which the audible distraction is caused to be rendered as a sound source, is based on a location of an external, real-world object.

9. The apparatus of any preceding claim wherein the audible distraction comprises different audio content when rendered as a sound source at different locations which are external to the device.

10. The apparatus of any preceding claim wherein audio content of the audible distraction comprises audio content having a preexisting association with the location at which the audible distraction is caused to be rendered as a sound source.

11. The apparatus of any preceding claim wherein user-device interaction parameters comprise one or more of: data indicative of actuation of the device; data indicative of an environment in which the device is located; or data indicative of biometric parameters of the user.

12. The apparatus of any preceding claim wherein analyzing the obtained values of the user-device interaction parameters comprises determining whether the obtained values of the user-device interaction parameters are within at least one subspace of a defined parameter space, spanned by the user-device interaction parameters, wherein the at least one subspace is associated with causing rendering of the audible distraction,
wherein the first one or more values of user-device interaction parameters describe a point in the parameter space which is within the at least one subspace, and
wherein the second, different one or more values of user-device interaction parameters describe a point in the parameter space which is not within the at least one subspace.

13. The apparatus of claim 12 wherein definition of the at least one subspace is based on one or more goals for the user in respect of user-device interaction.

14. A method comprising:
obtaining one or more values of user-device interaction parameters that parameterize user-device interaction;
analyzing the obtained one or more values of the user-device interaction parameters to determine whether to cause rendering of an audible distraction;
wherein for a first one or more values of user-device interaction parameters, the audible distraction is caused to be rendered as a sound source at a location which is external to the device and which is not currently associated with rendering of sound sources, and
wherein for a second, different one or more values of user-device interaction parameters, the audible distraction is not caused to be rendered as a sound source at the location which is external to the device and which is not currently associated with rendering of sound sources.

15. A computer program that, when run on a computer, performs:
obtaining one or more values of user-device interaction parameters that parameterize user-device interaction;
analyzing the one or more obtained values of the user-device interaction parameters to determine whether to cause rendering of an audible distraction;
wherein for a first one or more values of user-device interaction parameters, the audible distraction is caused to be rendered as a sound source at a location which is external the device and which is not currently associated with rendering of sound sources, and
wherein for a second, different one or more values of user-device interaction parameters, the audible distraction is not caused to be rendered as a sound source at the location which is external to the device and which is not currently associated with rendering of sound sources.
